# NEW EUROPEAN PATENT SPECIFICATION

(11) **EP 0 562 085 B2**
(45) Date of publication and mention of the opposition decision: **24.03.1999**
(45) Mention of the grant of the patent: 02.08.1995
(21) Application number: 92921521.8
(22) Date of filing: 15.10.1992
(51) Int. Cl.: B60J 3/02

(54) **SUN VIZOR FOR MOTOR VEHICLES**
SONNENBLENDE FUER KRAFTFAHRZEUGE
VISIERE PARE-SOLEIL POUR VEHICULE AUTOMOBILE

(30) Priority: 23.10.1991 ES 9102450
(43) Date of publication of application: 29.09.1993
(73) Proprietor: FICO I.T.M., S.A., E-08027 Barcelona (ES)
(72) Inventor: AYMERICH MUNOZ, José, E-08191 Rubi (ES); PRAT CASTAN, Jesús, E-08191 Rubi (ES)
(74) Representative: Hess, Peter K., Dipl.-Phys.
(86) International application number: PCT/ES92/00071
(87) International publication number: WO 93/08038

(56) References cited:
- EP-A- 0 399 187
- EP-B- 16 941
- DE-A- 1 958 831
- DE-B- 1 163 176
- DE-C- 1 555 851
- US-A- 4 494 789

## Description

### Field of the Invention

The object of the present invention is a sun visor for automobiles and, particularly, a sun visor manufactured by blow moulding of a plastics material.

### Background of the Invention

Embodiments of automobile sun visors manufactured from a hollow body member obtained by blow moulding of a plastics material such as, among others, polythene, are well known. These sun visors may comprise, like the visors based, for example, on a net structure, the so-called vanity mirror, which is usually arranged in the passenger side sun visor, and which may simply be superimposed on the corresponding side of the sun visor or be attached thereto by a cavity prepared for such purpose.

Further to the said vanity mirror, the sun visors generally comprise a retaining spring and a hanging bridge situated in respective corresponding ends of the sun visor. The purpose of the retaining spring is to receive the pivot pin of the bent support attached to the vehicle structure so that, when engaged, the sun visor may be moved about said pivot pin by a simple manual operation and occupy stable positions of use freely selected by the user. The hanging bridge may be engaged, in turn, to a support member also attached to the vehicle structure so that, once engaged, they provide the sun visor with an auxiliary point of support helping to withstand possible mechanical overloads capable of affecting the engagement of said retaining spring and the pivot pin of the bent support, weakening their resistance to untimely movement.

As an example of a prior embodiment of a sun visor manufactured from a one-piece hollow body member blow moulded from a plastics material comprising the above mentioned elements, there may be mentioned the Spanish patent application P 9100391 (See EP-A-0 525 148 enjoying the priority date of February 14th, 1991). This patent describes a sun visor, the hollow body member of which is formed at one end thereof with a through orifice defining a hanging bridge and which internally houses and retains at the end opposite to the aforesaid one a retaining spring which is accessible from the outside of the sun visor only through a pertinent opening.

Prior art document DE-A-1958831 describes a sun visor comprising a support member for attaching the sun visor to the vehicle structure. The support member comprises a locking part which is connected to the hollow body member of the sun visor by internal projections. The internal projections extend from the two sides of the hollow body, extend through openings in the locking part. According to another embodiment of this document, a reinforcement of the connection between the locking part and the hollow body is accomplished by ribs formed in the two sides of the hollow body and corresponding convex ledges in the locking part. The prior art document DE-A-195 88 31 does, however, not disclose ribs being distributed across the larger facing sides of the hollow body, such that they prevent the hollow body from being deformed.

In general, the sun visor hollow body members formed by blow moulding of plastics materials have a limited mechanical strength, which, under normal conditions of use, easily causes deformation. To avoid this drawback, the said hollow body members are generally provided with additional structural reinforcement members. In this regard, there may be mentioned those provided by said Spanish patent P 9100391 (See EP-A-0 525 148 enjoying the priority date of February 14th, 1991) consisting basically of a filling contained inside said body member. The filling is formed by an appropriate plastics material, such as polyurethane. The filling of the one-piece hollow body member by plastics materials to increase the mechanical strength thereof and avoid deformation under normal conditions of use suffers as the main drawback from a high production cost which, obviously, makes the finished product more expensive.

### Summary of the Invention

With a view to providing a new sun visor embodiment which solves the previously described drawbacks and which basically consists of the high financial cost of the additional structural reinforcement means required by the one-piece hollow body members manufactured by blow moulding of a plastics material, an automobile sun visor of new structure is disclosed.

The automobile sun visor of the invention comprises the following members:
**a.** an essentially prismatic rectangular one-piece body member (C) of variable contour depending on the internal configuration of the vehicle passenger compartment, which body member (C), which is formed by blow molding a plastics material, preferably polypropylene, may include any type of regular additional device, such as may be, among others, the so-called vanity mirror;
**b.** a retaining spring (R), made preferably from a high spring steel sheet, which is fixedly attached to said one-piece body member by recesses (2) formed in said body member, said recesses (2) framing said retaining spring (R) and preventing said retaining spring from being moved out of position thereby, said retaining spring being capable of receiving and retaining the corresponding portion of a pivot (4) of a bent-support (1) attached to the vehicle structure so that, once they are coupled together, said retaining spring (R) may rotate about said pivot pin (4) occupying stable positions of use and set the rest position of the sun visor;
**c.** a hanging bridge (P) which may be engaged with the corresponding support attached to the vehicle structure; and
**d.** a sheath-like external covering (RE), preferably made from a plastics material, preferably polypropylene, and which confers on the sun visor a finish in keeping with the finish of the vehicle passenger compartment, wherein
**e.** the inner opposite sides (8, 8') with a higher surface of the one-piece hollow body C are provided with a plurality of ribs (9, 9', 9a) reinforcing the mechanical strength of the body member (C), to prevent it from deformation, said ribs
**e1.** are directed towards the inside of the hollow body;
**e2.** are made by means of punching from the outside of the hollow body during the forming process of said hollow body member (C);
**e3.** being hollow and of substantially circular cross-section, and defining on the external surface of the corresponding side of the one-piece hollow body a small bore;
**e4.** have a length such that their inner end performs a simple support on another opposite rib or on the inner side of the opposite inner side, without need of fixing said end to its support; and
**e5.** being distributed across the larger facing internal sides (8, 8') of the body member (C), such that they prevent the hollow body (C) from being deformed.

The above described features of the sun visor of the invention confer on the one-piece hollow body member a high mechanical strength which, under normal conditions of use, prevents it from becoming deformed and, furthermore, at a low cost since the said reinforcing ribs are obtained, during the corresponding step of the production process, by known, relatively simple mechanical processes.

The inner free volume of the one-piece hollow body member may be filled by a plastics material, preferably poly-propylene, exclusively to avoid the sound effects that the one-piece hollow body member may generate for it being an acoustic cavity. Obviously, the filling of the one-piece hollow body member or, what is the same, its sound-proofing will depend on the level of finish required by the vehicle passenger compartment in each particular case.

It is to be noted that, as said above, both the one-piece hollow body member and the external covering thereof and, optionally, the sound proof filling of the sun visor of the invention are prepared, preferably, from polypropylene. As is known, this material combines with its mechanical properties, which are particularly indicated for the proposed purposes, the fact that it is a completely recyclable material; i.e. at the end of its useful life, the sun visor of the invention may be recycled and the constituent materials may be reclaimed for subsequent industrial reuse and, as a result of the above, the said constituent materials of the sun visor of the invention are prevented from contributing to the pollution and consequent degradation of the environment as being industrial waste.

### Brief Description of the Drawings

The automobile sun visor of the invention is illustrated in the drawing sheets accompanying this description. In said drawings:
Figure 1 is a front view of the sun visor of the invention.
Figure 2 is a front view of another embodiment of the sun visor of the invention.
Figure 3 is a cross-section view on the line III-III of Figure 1.
Figure 4 is a cross-section view on the line IV-IV of Figure 1.
Figure 5 is a cross-section view on the line V-V of Figure 2.
Figure 6 is a cross-section view of a further embodiment of the sun visor of the invention.

### Detailed Description of the Embodiment

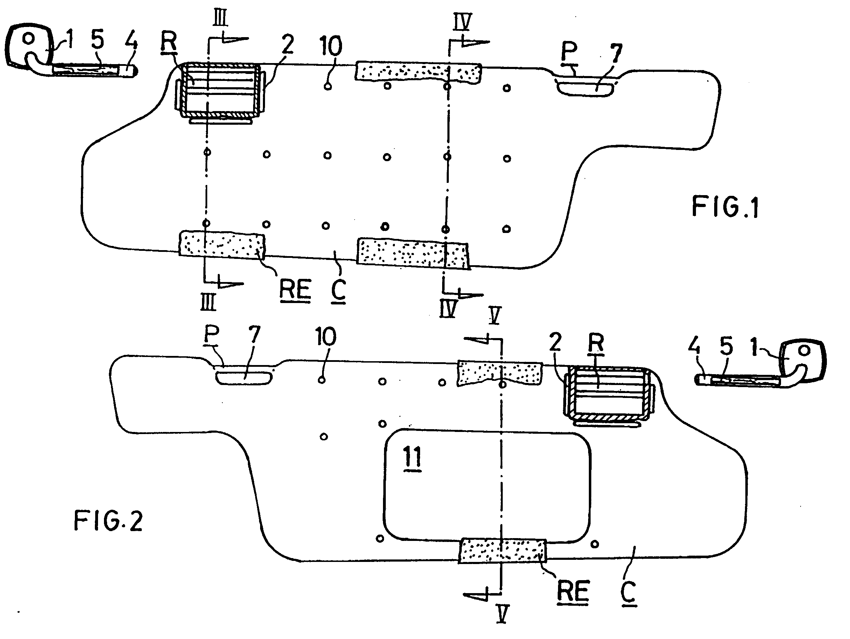

The automobile sun visor of the invention described as an example of embodiment comprises, as shown in Figures 1 and 2 of the drawing sheets, the one-piece hollow body member C, the retaining spring R, the hanging bridge P and the outer covering RE.

Figures 1, 3 and 4 show how the automobile sun visor one-piece hollow body member C is essentially a rectangular prism and the contour thereof depends on the configuration of the vehicle passenger compartment in each case. The contour of the sun visor shown in Figure 1 is given only as an example.

The hollow body member C, as said above, is formed by blow moulding of a plastics material, preferably polypropylene.

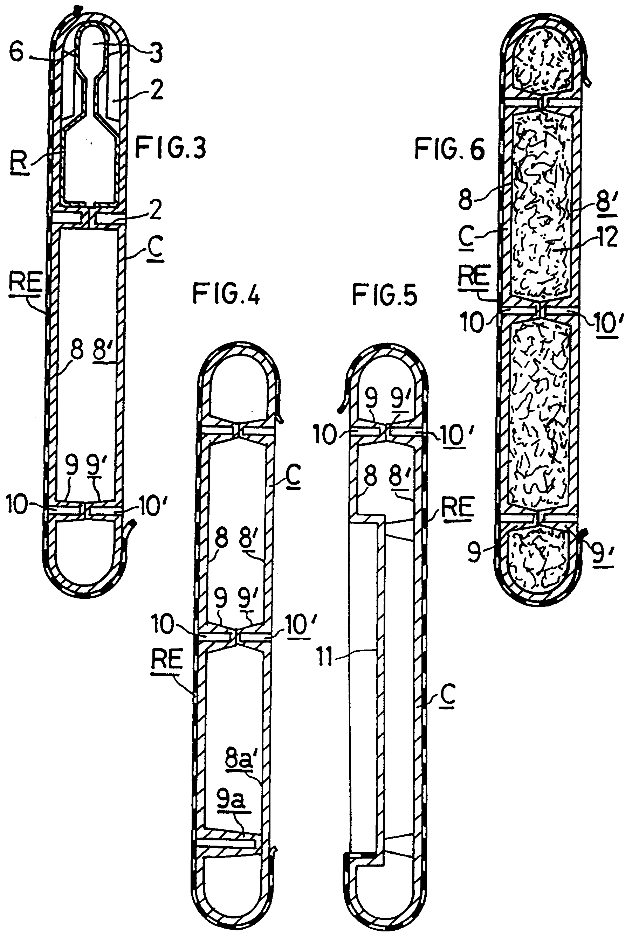

Figure 1 shows how the hollow body member C is provided at one end thereof, suitably disposed relative to the bent support 1 which is attached to the vehicle structure, with the retaining spring R which, in this embodiment, is housed entirely within the hollow body member C. Figures 1 and 3 show how the retaining spring R is framed by the recesses 2 formed in the hollow body member C and which prevent said retaining spring R from being moved out of position.

The retaining spring R is made preferably from high spring metal sheet and, as shown in Figure 3, forms the longitudinal cavity 3 which is snugly to receive the corresponding portion of the pivot pin 4 of the bent support 1.

The said longitudinal cavity 3 of the retaining spring R and the portion of the pivot pin 4 of the bent support 1 are dimensioned and shaped in such a way that, once coupled together, they allow the sun visor to be rotated around said pivot pin 4 and to stably occupy any position of use selected by the user, i.e. independently of the vibrations caused by the vehicle when running.

Figures 1 and 3 show how the longitudinal cavity 3 of the retaining spring R and the pivot pin 4 of the bent support 1 are provided with positioning flats 5 and 6, respectively, the purpose of which is to ensure the rest position of the sun visor of the invention.

Figure 1 shows how the hollow body member C, at the opposite end to the one occupied by the retaining spring R, is formed with a through orifice 7 defining the hanging bridge P. The auxiliary support member also attached to the vehicle structure may slide through said through orifice 7. For greater clarity, it has not been shown in the drawings. As said above, the purpose of the auxiliary support member is to prevent the engagement of the pivot pin 4 of the bent support 1 with the retaining spring R being subjected to mechanical overloads, which may affect the correct operation of said engagement.

In this embodiment of the sun visor of the invention, Figures 3 and 4 show how each of the two larger facing internal sides, 8 and 8' respectively, of the hollow body member C are formed with corresponding facing reinforcing ribs 9 and 9', the free ends of which bear against each other so that, under normal conditions of use, they prevent the hollow body member C from being deformed or broken or torn.

Figures 3 and 4 show how the reinforcing ribs 9 and 9' are essentially frustoconical in shape, are relatively small and are formed by punching during the forming process of the hollow body member C.

The rib 9a appearing at the bottom of Figure 4 projects outwardly from the side 8 and is sufficiently long to reach the flat inner surface 8a' of the opposite side 8a. This unique feature distinguishes the rib 9a from the other ribs 9 and 9' shown in the drawings. In this way, the reinforcement is obtained directly between the free end of the rib 9a extending from one of the sides (side 8 in the example of Figure 4) and the opposite side 8'.

The number and layout of the reinforcing ribs 9 and 9' depend on the dimensions and configuration of the hollow body member C in each particular application, whereby the number and layout of the reinforcing ribs 9 and 9' shown in Figure 1 are given only as an orientative example.

Figures 1, 3 and 4 show how the hollow body member C is provided with the outer covering, or sheath, RE, which has been shown in part in said Figures. The outer covering RE provides the sun visor of the invention with an external finish in keeping with the internal finish of the vehicle passenger compartment and so that the entry edges of the holes 10 and 10' formed during the punching of the hollow body member C to provide the structural reinforcing ribs 9 and 9', respectively, may not be perceptible to the touch under any circumstance.

Figures 2 and 5 show another embodiment of the automobile sun visor of the invention. In order to maintain an adequate continuity of disclosure, in this further embodiment like reference symbols have been given to all those parts which are common to the embodiment described before and illustrated in Figures 1, 3 and 4.

In this way, Figures 2 and 5 show how in this further embodiment of the sun visor of the invention, the hollow body member C is formed, on the corresponding outer face thereof, with the cavity 11 having an essentially rectangular contour. This cavity 11 is for receiving a device of regular use such as, among others, the so-called vanity mirror which, for the same reasons as given above, has not been shown in the drawing figures.

Figures 2 and 5 show how the number and layout of the reinforcing ribs 9 and 9' provided in the hollow body member C differ from the number and layout of the said reinforcing ribs 9 and 9' provided in the prior embodiment shown in Figures 1, 3 and 4. In fact, in this other embodiment of the sun visor of the invention shown in Figures 2 and 5, the number and layout of the reinforcing ribs 9 and 9' has been adapted to the structural reinforcement needs of the new configuration of the hollow body member C, such that, under normal conditions of use, the deformation, tearing or breakage thereof is avoided.

The fact that the hollow body member C of the two foregoing embodiments described and illustrated in Figures 1, 3 and 4 and in Figures 2 and 5, respectively, is an acoustic cavity may cause sound effects which are inappropriate in cases where a high level of comfort is required in the vehicle passenger compartment.

To avoid the above described drawback, Figure 6 shows a further embodiment of the sun visor of the invention. To maintain an adequate continuity of disclosure, the same reference symbols have been given in this further sun visor embodiment to all those parts which are common to the two embodiments described previously and shown in Figures 1, 3 and 4 and in Figures 2 and 5, respectively.

In this way, Figure 6 shows how the inner volume of the hollow body member C has the sound-proofing filling 12 formed by a plastics material, preferably polypropylene.

In the three embodiments of the sun visor of the invention described and shown in the drawing figures, the preferred material used for forming the hollow body member C, the outer covering RE and the sound-proofing filling 12 is, as has been said above, polypropylene. In this way, as described before, at the end of its useful life, the sun visor of the invention may be recycled, allowing for the subsequent industrial reuse of its constituent materials.

## Claims

1. Automobile sun visor comprising the following members:
**a.** an essentially prismatic rectangular one-piece body member (C) of variable contour depending on the internal configuration of the vehicle passenger compartment, which body member (C), which is formed by blow molding a plastics material, preferably polypropylene, may include any type of regular additional device, such as may be, among others, the so-called vanity mirror;
**b.** a retaining spring (R), made preferably from a high spring steel sheet, which is fixedly attached to said one-piece body member by recesses (2) formed in said body member, said recesses (2) framing said retaining spring (R) and preventing said retaining spring from being moved out of position thereby, said retaining spring being capable of receiving and retaining the corresponding portion of a pivot (4) of a bent-support (1) attached to the vehicle structure so that, once they are coupled together, said retaining spring (R) may rotate about said pivot pin (4) occupying stable positions of use and set the rest position of the sun visor;
**c.** a hanging bridge (P) which may be engaged with the corresponding support attached to the vehicle structure; and
**d.** a sheath-like external covering (RE), preferably made from a plastics material, preferably polypropylene, and which confers on the sun visor a finish in keeping with the finish of the vehicle passenger compartment, wherein
**e.** the inner opposite sides (8, 8') with a higher surface of the one-piece hollow body C are provided with a plurality of ribs (9, 9', 9a) reinforcing the mechanical strength of the body member (C), to prevent it from deformation, said ribs
**e1.** are directed towards the inside of the hollow body;
**e2.** are made by means of punching from the outside of the hollow body during the forming process of said hollow body member (C);
**e3.** being hollow and of substantially circular cross-section, and defining on the external surface of the corresponding side of the one-piece hollow body a small bore;
**e4.** have a length such that their inner end performs a simple support on another opposite rib or on the inner side of the opposite inner side, without need of fixing said end to its support; and
**e5.** being distributed across the larger facing internal sides (8, 8') of the body member (C), such that they prevent the hollow body (C) from being deformed.

2. The automobile sun visor of the foregoing claim, characterized in that the hollow body member (C) has a soundproofing filling (12) in the interior thereof.

3. The automobile sun visor of any of the foregoing claims 1 and 2, characterized in that the hollow body member (C) is made from polypropylene.

4. The automobile sun visor of claim 2, characterized in that the sound-proof filling (12) is made from polypropylene.

## Patentansprüche

1. Kraftfahrzeug-Sonnenblende mit den folgenden Teilen:
a. ein im wesentlichen prismatisches, rechteckiges, einstückiges Rumpfteil (c) mit einer variablen Kontur in Abhängigkeit von der inneren Ausbildung des Fahrzeug-Fahrgastabteils, wobei dieses Rumpfteil (c), das durch Blasformen eines Kunststoffmaterials gebildet ist, bevorzugt von Polypropylen, irgendeine Art einer regulären zusätzlichen Vorrichtung umfassen kann, wie sie unter anderem der sogenannte Kosmetikspiegel sein kann;
b. eine Haltefeder (R) die bevorzugt aus hochfederndem Stahlblech hergestellt ist, die fest an dem einstückigen Rumpfteil mittels einer Aussparung (2) angebracht ist, wobei die Aussparung (2) die Haltefeder (R) umrahmt und verhindert, daß die Haltefeder (R) aus ihrer Position bewegt wird; und wobei die Haltefeder (R) im stande ist, den entsprechenden Abschnitt des Schwenkstiftes 4 des gebogenen Trägers (1) aufzunehmen und zu halten, der am Fahrzeugaufbau angebracht ist, so daß, wenn sie erst einmal zusammengekoppelt sind, die genannte Haltefeder (R) um den genannten Schwenkstift (4) herumschwenken kann, wobei sie stabile Gebrauchslagen einnimmt und die Ruhelage der Sonnenblende festlegen kann;
c. eine Aufhängebrücke (P), die mit dem entsprechenden Träger in Eingriff gebracht werden kann, der am Fahrzeugaufbau angebracht ist;
d. und eine Hüllenartige äußere Abdeckung (RE), die bevorzugt aus Kunststoff, vorzugsweise Polypropylen, hergestellt ist und der Sonnenblende eine Endausführung beim Anpassen an die Endausführung des Fahrzeug-Fahrgastabteils verleiht; wobei
e. die inneren, gegenüberliegenden Seiten (8,8') mit einer höheren Oberfläche des einstückigen hohlen Rumpfes (c) mit einer Vielzahl von Verstärkungsrippen (9,9',9a) zur Verstärkung der mechanischen Stärke des Rumpfteils versehen sind, um dessen Deformation zu verhindern,
wobei die Rippen
e.1. der Innenseite des hohlen Rumpfes zugewandt sind,
e.2. durch Stanzen von der Außenseite des hohlen Rumpfes her beim Formungsprozeß des hohlen Rumpfteils (c) hergestellt sind;
e.3. hohl sind, einen im wesentlichen kreisförmigen Querschnitt aufweisen und an der Außenoberfläche der entsprechenden Seite des einstückigen hohlen Rumpfes eine kleine Bohrung festlegen;
e.4. eine solche Länge haben, daß ihr inneres Ende eine einfache Abstützung auf einer anderen, gegenüberliegenden Rippe oder auf der Innenseite der gegenüberliegenden Innenseite durchführt ohne das Erfordernis der Befestigung des genannten Endes an seinem Träger bzw. seiner Abstützung;
e.5. über die größeren gegenüberliegenden Innenseite (8,8') des Rumpfteils (C) so verteilt sind, daß sie eine Verformung des hohlen Rumpfes (C) verhindern.

2. Kraftfahrzeug-Sonnenblende des vorhergehenden Anspruchs dadurch gekennzeichnet, daß das hohle Rumpfteil (C) eine schalldichtende Füllung (12) in seinem Inneren aufweist.

3. Kraftfahrzeug-Sonnenblende nach Anspruch 1 oder 2, dadurch gekennzeichnet, daß das hohle Rumpfteil (C) aus Polypropylen hergestellt ist.

4. Kraftfahrzeug-Sonnenblende des Anspruchs 2 dadurch gekennzeichnet, daß die schalldichte Füllung (12) aus Polypropylen hergestellt ist.

## Revendications

1. Pare-soleil d'automobile comprenant les éléments suivants :
a. un élément formant corps monobloc rectangulaire essentiellement prismatique (C) ayant un contour variable en fonction de la configuration intérieure de l'habitacle du véhicule, lequel élément formant corps (c), qui est formé par moulage par soufflage d'une matière plastique, de préférence du polypropylène, peut comporter n'importe quel type de dispositif additionnel régulier, comme par exemple, entre autres, ce qu'on appelle le miroir de courtoisie;
b. un ressort de retenue (R) formé de préférence par une tôle d'acier très élastique, qui est fixée fermement audit élément formant corps monobloc au moyen de renfoncements (2) formés dans ledit élément formant corps, lesdits renfoncements (2) encadrant ledit ressort de retenue (R) et empêchant que ledit ressort de retenue se dégage de ce fait de sa position, ledit ressort de retenue pouvant recevoir et retenir la partie correspondante d'un pivot (4) d'un support coudé (1) fixé à la structure du véhicule de sorte que, une fois que ces éléments sont accouplés entre eux, ledit ressort de retenue (R) peut tourner autour de ladite broche de pivot (4) en occupant des positions stables d'utilisation et permet de régler la position de repos du paresoleil;
c. un étrier de suspension (P) qui peut coopérer avec le support correspondant fixé à la structure du véhicule; et
d. un capot extérieur en forme de gaine (RE), réalisé de préférence en une matière plastique, de préférence du polypropylène, et qui confère au pare-soleil un fini correspondant au fini de l'habitacle du véhicule, dans lequel
e. les côtés intérieurs opposés (8,8') avec une surface plus élevée du corps creux monobloc C sont pourvus d'une pluralité de nervures (9,9',9a) qui augmentent la résistance mécanique de l'élément formant corps (C) de manière à empêcher une déformation de cet élément, lesdites nervures
e1. sont dirigées vers l'intérieur du corps creux;
e2. sont formées par emboutissage à partir de la surface extérieure du corps creux pendant le processus de formation dudit élément formant corps creux (C);
e3. sont creuses et possèdent une section transversale essentiellement circulaire et définissent, sur la surface extérieure du côté correspondant du corps creux monobloc, un petit perçage;
e4. possèdent une longueur telle que leur extrémité intérieure est simplement en appui sur une autre nervure opposée ou sur la nervure intérieure du côté intérieur opposé, sans qu'il soit nécessaire de fixer ladite extrémité à son support; et
e5. sont réparties en travers des côtés intérieurs plus étendus (8,8'), situés en vis-à-vis, de l'élément formant corps (C), de sorte qu'ils empêchent une déformation du corps creux (C).

2. Pare-soleil d'automobile selon la revendication précédente, caractérisé en ce que l'élément formant corps creux (C) contient, en son intérieur, un garnissage insonorisant (12).

3. Pare-soleil d'automobile selon l'une des revendications 1 et 2 précédentes, caractérisé en ce que l'élément formant corps creux (C) est formé de polypropylène.

4. Pare-soleil d'automobile selon la revendication 2, caractérisé en ce que le garnissage insonorisant (12) est formé de polypropylène.
